(19) **Europäisches Patentamt European Patent Office Office européen des brevets**

(11) **EP 4 746 170 A2**

(12) **EUROPEAN PATENT APPLICATION**

(43) Date of publication:
20.05.2026 Bulletin 2026/21

(21) Application number: 25215647.6

(22) Date of filing: 13.11.2025

(51) International Patent Classification (IPC):
$H01M\ 50/403^{(2021.01)}$   $H01M\ 10/0525^{(2010.01)}$
$H01M\ 50/426^{(2021.01)}$   $H01M\ 50/434^{(2021.01)}$
$H01M\ 50/443^{(2021.01)}$   $H01M\ 50/446^{(2021.01)}$

(52) Cooperative Patent Classification (CPC):
H01M 10/0525; H01M 50/403; H01M 50/426;
H01M 50/434; H01M 50/443; H01M 50/446

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.11.2024 KR 20240162965**
**12.11.2025 KR 20250170517**

(71) Applicant: **SK On Co., Ltd.**
**Seoul 03161 (KR)**

(72) Inventors:
• **RYU, Hye Min**
**34124 Daejeon (KR)**
• **PARK, Myung Soo**
**34124 Daejeon (KR)**
• **LEE, Seung Hwan**
**34124 Daejeon (KR)**
• **LEE, Han Sol**
**34124 Daejeon (KR)**
• **CHOI, Jae Hoon**
**34124 Daejeon (KR)**
• **GO, Hyeon Jin**
**34124 Daejeon (KR)**
• **BAN, Hee Jung**
**34124 Daejeon (KR)**

(74) Representative: **Prüfer & Partner mbB**
**Patentanwälte · Rechtsanwälte**
**Sohnckestraße 12**
**81479 München (DE)**

(54) **ORGANIC-INORGANIC COMPOSITE MEMBRANE FOR SECONDARY BATTERY, METHOD FOR MANUFACTURING THE SAME, AND LITHIUM SECONDARY BATTERY INCLUDING THE SAME**

(57) The present disclosure relates to an organic-inorganic composite membrane for a secondary battery including: a porous matrix containing a fluorine-based copolymer and lithium-lanthanum-zirconium-based oxide particles; and a crosslinked network polymer electrolyte filling one or more pores of the porous matrix, wherein the fluorine-based copolymer contains 10 to 25 wt% of a hexafluoropropylene-derived repeating unit, a method for manufacturing the same, and a lithium secondary battery including the same.

FIG. 1

Example 1    Comparative Example 1

EP 4 746 170 A2

## Description

### CROSS-REFERENCE TO RELATED APPLICATIONS

This application claims priority under 35 U.S.C. §119 to Korean Patent Application No. 10-2024-0162965, filed on November 15, 2024, and 10-2025-0170517, filed on November 12, 2025, in the Korean Intellectual Property Office, the disclosure of which is incorporated herein by reference in its entirety.

### TECHNICAL FIELD

The following disclosure relates to an organic-inorganic composite membrane for a secondary battery, a method for manufacturing the same, and a lithium secondary battery including the same.

### BACKGROUND

As the demand for eco-friendly energy increases, research on electrochemical devices has been conducted in various fields, including electronic devices such as mobile phones and personal computers (PCs), and electric vehicles. In general, a lithium secondary battery, which is a general-purpose electrochemical device, includes a lithium transition metal oxide positive electrode, a graphite-based negative electrode, a liquid organic electrolyte, and the like. High-performance next-generation lithium secondary batteries have been developed through the development and application of various types of new materials to improve not only electrochemical performance such as high capacity, high output, and long lifespan, but also external characteristics such as high-temperature and low-temperature properties, safety, durability, and reliability.

Specifically, attempts have been made to apply solid electrolytes in order to solve the problem of safety deficiencies resulting from the flammability, corrosiveness, thermal instability, and high-voltage vulnerability of liquid organic electrolytes. In particular, oxide-based inorganic solid electrolytes have high ionic conductivity, excellent thermal and chemical stability, and superior mechanical strength, thereby effectively suppressing lithium dendrite growth; however, they have poor film formability, which makes it difficult to manufacture free-standing membranes.

In order to solve this problem, the oxide-based inorganic solid electrolyte has been coated onto a porous separator. However, in this case, a sufficient amount of the oxide-based inorganic solid electrolyte cannot be incorporated, resulting in low ionic conductivity and reduced process efficiency. Alternatively, in order to improve film formability, oxide-based inorganic solid electrolytes have been mixed with polymers to manufacture films. However, problems still remain in such cases. Since the formation of pores is difficult, the resulting films are unsuitable for use as separators. As a result, an additional foaming agent should be added to form pores, which requires additional raw materials or processes, and there are limitations in controlling the shape and size of the pores.

In addition, in a conventional technique, when an inorganic solid electrolyte and a solvent contained in a slurry composition are reactive with each other, there are many restrictions in the manufacturing process. Therefore, it is necessary to consider the interaction between the inorganic solid electrolyte and the solvent to stably manufacture an organic-inorganic composite membrane.

Therefore, there is an urgent need for the development of an organic-inorganic composite membrane that has high ionic conductivity and excellent chemical stability, and may be manufactured as a free-standing membrane.

### SUMMARY

An embodiment of the present disclosure is directed to providing a slurry composition for manufacturing an organic-inorganic composite membrane that is chemically stable with almost no reactivity between a solvent and inorganic solid electrolyte particles during manufacturing and has excellent film formability, and a method for preparing the same.

Another embodiment of the present disclosure is directed to providing an organic-inorganic composite membrane that may be manufactured as a free-standing membrane from the slurry composition for manufacturing an organic-inorganic composite membrane and has excellent ionic conductivity, and a method for manufacturing the same.

Still another embodiment of the present disclosure is directed to providing a lithium secondary battery including the organic-inorganic composite membrane instead of a conventional separator, thereby exhibiting excellent high-rate performance.

In one general aspect, an organic-inorganic composite membrane for a secondary battery includes: a porous matrix containing a fluorine-based copolymer and lithium-lanthanum-zirconium-based oxide particles; and a crosslinked network polymer electrolyte filling one or more pores of the porous matrix, wherein the fluorine-based copolymer contains 10 to 25 wt% of a hexafluoropropylene-derived repeating unit.

The fluorine-based copolymer may be polyvinylidene fluoride-hexafluoropropylene.

The fluorine-based copolymer may be contained in an amount of 10 to 60 wt% based on the total weight of the porous matrix.

The lithium-lanthanum-zirconium-based oxide particles may be represented by the following Chemical Formula 1:

$$[\text{Chemical Formula 1}] \qquad Li_xM_{1a}M_{2b}La_yZr_zM_{3c}O_{12}$$

wherein

$5 \leq x \leq 9$, $0 \leq a \leq 4$, $0 \leq b \leq 4$, $2 \leq y \leq 4$, $1 \leq z \leq 3$, and $0 \leq c \leq 4$, and

$M_1$ to $M_3$ are each independently an element selected from the group consisting of Na, Mg, Ca, Y, Ti, Hf, V, Nb, Ta, Cr, Mo, W, Mn, Co, Fe, Cu, Ag, Zn, B, Al, Ga, C, Si, and Sn.

The lithium-lanthanum-zirconium-based oxide particles may be contained in an amount of 40 to 90 wt% based on the total weight of the porous matrix.

The porous matrix may include a continuous phase containing the fluorine-based copolymer and a dispersed phase containing the lithium-lanthanum-zirconium-based oxide particles.

The crosslinked network polymer electrolyte may contain an acrylic-based polymer and a lithium salt.

The crosslinked network polymer electrolyte may be contained in an amount of 10 to 80 parts by weight based on 100 parts by weight of the porous matrix.

In another general aspect, a slurry composition for manufacturing an organic-inorganic composite membrane contains a fluorine-based copolymer, lithium-lanthanum-zirconium-based oxide particles, a first solvent, and a second solvent, wherein the fluorine-based copolymer contains 10 to 25 wt% of a hexafluoropropylene-derived repeating unit, and the second solvent has a lower polarity than the first solvent.

The first solvent may have a Hansen solubility parameter ($\delta_{Ts1}$) of 18 to 25 $MPa^{0.5}$.

A difference in Hansen solubility parameter between the first solvent and the fluorine-based copolymer may be 1 $MPa^{0.5}$ or more and less than 15.0 $MPa^{0.5}$.

The second solvent may have a Hansen solubility parameter ($\delta_{Ts2}$) of 17 $MPa^{0.5}$ or less.

The first solvent and the second solvent may each have a dipole moment of 2.8 Debye (D) or less and a dielectric constant of 20 or less.

A weight ratio of the first solvent to the second solvent may be 5 to 50:1.

In still another general aspect, a method for manufacturing an organic-inorganic composite membrane for a secondary battery includes: (S1) preparing a slurry composition for manufacturing an organic-inorganic composite membrane, the slurry composition containing a fluorine-based copolymer, lithium-lanthanum-zirconium-based oxide particles, a first solvent, and a second solvent; (S2) forming a porous matrix by applying and drying the slurry composition; and (S3) impregnating a multifunctional monomer composition into the porous matrix and performing curing to form a crosslinked network polymer electrolyte, wherein the fluorine-based copolymer contains 10 to 25 wt% of a hexafluoropropylene-derived repeating unit.

The step (S1) may include (a) dissolving the fluorine-based copolymer in the first solvent; and (b) adding and mixing the lithium-lanthanum-zirconium-based oxide particles and the second solvent.

The step (S2) may include (a) drying the first solvent of the slurry composition at a first drying temperature; and (b) drying the second solvent of the slurry composition at a second drying temperature.

The second drying temperature may be higher than the first drying temperature.

The multifunctional monomer composition may contain a multifunctional acrylic-based monomer, initiator and a lithium salt.

In still another general aspect, a lithium secondary battery includes the organic-inorganic composite membrane for a secondary battery.

Other features and aspects will be apparent from the following detailed description, the drawings, and the claims.

**BRIEF DESCRIPTION OF THE DRAWINGS**

FIG. 1 is an image showing the results of evaluating film formability of organic-inorganic composite electrolyte slurries of Example 1 and Comparative Example 1.

FIG. 2 is a graph showing a change in discharge capacity with the number of cycles for organic-inorganic composite electrolytes of Example 1 and Comparative Example 4.

## DETAILED DESCRIPTION OF EMBODIMENTS

Hereinafter, the present disclosure will be described in more detail with reference to exemplary embodiments or examples. However, the following exemplary embodiments or examples are only references to explain the present disclosure in detail, and the present disclosure is not limited thereto and may be implemented in various forms.

In addition, unless otherwise defined, all the technical terms and scientific terms used have the same meanings as commonly understood by those skilled in the art to which the present disclosure pertains. The terms used in the present disclosure are merely used to effectively describe a specific exemplary embodiment, but are not intended to limit the present disclosure.

In addition, unless the context clearly indicates otherwise, singular forms used in the specification and the appended claims may be intended to include plural forms.

In addition, unless explicitly described to the contrary, "comprising" any components will be understood to imply further inclusion of other components rather than the exclusion of any other components.

In addition, unless otherwise specified, the units used in the present specification are based on weight, and as an example, a unit of % or a ratio refers to wt% or a weight ratio. Unless otherwise defined, wt% refers to wt% of any one component in the total composition.

In addition, in the present specification, the terms "-based polymer", "-based copolymer", and "-based oxide" are used in a broad sense to include "a derivative of a -polymer", "a derivative of a -copolymer", and "a derivative of a -based oxide".

In addition, a numerical range used in the present specification includes upper and lower limits and all values within these limits, increments logically derived from a form and span of a defined range, all doubly limited values, and all possible combinations of the upper and lower limits in the numerical range defined in different forms. Unless otherwise specifically defined in the present specification of the present disclosure, values out of the numerical range that may occur due to experimental errors or rounded values also fall within the defined numerical range.

In addition, the term "Hansen Solubility Parameters (HSP)" as used in the present specification refers to parameters used to predict the solubility of a specific substance (solute) in a specific solvent, and represents the Hansen Solubility Parameter (proposed by Dr. C. Hansen in 1967), which is determined by considering three parameters representing the degree of molecular interaction within a material: non-polar dispersion forces, polar interactions caused by permanent dipoles, and hydrogen bonding.

In the conventional technique, when manufacturing an organic-inorganic composite solid electrolyte using an oxide-based inorganic solid electrolyte, excessive side reactions occur between the solvent and the oxide-based inorganic solid electrolyte, resulting in an increase in the viscosity of the slurry, which makes film formation difficult and causes poor film formability, making it difficult to manufacture a free-standing membrane.

In order to solve these problems, the oxide-based inorganic solid electrolyte has been coated onto a porous separator or mixed with a polymer to form a film. However, in this case, a sufficient amount of the oxide-based inorganic solid electrolyte cannot be incorporated, resulting in low ionic conductivity and reduced process efficiency. In addition, when an additional foaming agent is added to form pores, additional raw materials or processes are required, and the shape and size of the pores are difficult to control; therefore, a problem still remains.

According to an exemplary embodiment of the present disclosure, a porous matrix is manufactured using a slurry composition containing a fluorine-based copolymer containing a hexafluoropropylene-derived repeating unit in a specific amount, lithium-lanthanum-zirconium-based oxide particles, and a first solvent and a second solvent satisfying specific conditions, such that side reactions between the solvents and the lithium-lanthanum-zirconium-based oxide particles are effectively suppressed, and storage stability, manufacturing processability, and film formability are remarkably improved, enabling the manufacture of a free-standing membrane. In addition, a drying process is performed in at least two stages by utilizing the polarity difference between the first solvent and the second solvent, such that the shape and size of the micropores of the porous matrix may be precisely controlled. The first solvent and the second solvent may be solvents that are non-reactive with the lithium-lanthanum-zirconium-based oxide particles and stably disperse the particles while dissolving the polymer binder well.

In addition, the first solvent and the second solvent may have different polarities, and the porous matrix may be manufactured by utilizing a phase separation phenomenon. For example, the first solvent may have a higher polarity than the second solvent, and may thus serve as a good solvent that dissolves the fluorine-based copolymer more effectively. In addition, the second solvent may have a lower polarity than the first solvent and may thus serve as a non-solvent. The polarity may be identified from the $\delta_P$ parameter representing polarity in the Hansen solubility parameters, or may be identified from a dipole moment or a dielectric constant. For example, the difference in $\delta_P$ may be 3 or more, for example, about 3 to 8.

In addition, the first solvent and the second solvent may have different polarities and different boiling points, and the porous matrix may be manufactured by utilizing a phase separation phenomenon. For example, the first solvent may have a higher polarity and a lower boiling point than the second solvent, and may thus serve as a good solvent that dissolves the fluorine-based copolymer more effectively. In addition, the second solvent may have a lower polarity and a higher boiling point than the first solvent, and may thus serve as a non-solvent.

As described above, the fluorine-based copolymer contains 10 to 25 wt% of a hexafluoropropylene-derived repeating unit and the first solvent and the second solvent satisfying specific conditions are included under predetermined conditions, such that side reactions of the lithium-lanthanum-zirconium-based oxide particles during slurry preparation may be effectively suppressed, the slurry may have excellent storage stability and manufacturing processability, and the film formability may be significantly improved, thereby enabling the manufacture of a free-standing membrane.

In addition, the porous matrix thus manufactured may have excellent electrolyte impregnation properties, may be impregnated with a multifunctional composition and cured to form a crosslinked network polymer electrolyte, and may provide excellent ionic conductivity.

An exemplary embodiment of the present disclosure, an organic-inorganic composite membrane including a porous matrix having uniformly formed micropores and a polymer electrolyte uniformly impregnated into the pores may be provided. The polymer electrolyte filling the micropores may serve as a lithium-ion channel to facilitate lithium-ion transport, thereby achieving excellent ionic conductivity. The organic-inorganic composite membrane according to an exemplary embodiment of the present disclosure may achieve excellent processability, excellent electrochemical performance, and excellent chemical and physical stability. In addition, it has been found that a lithium secondary battery having excellent lifespan characteristics and high-rate performance may be provided using the organic-inorganic composite membrane according to an exemplary embodiment of the present disclosure.

Hereinafter, each component of the organic-inorganic composite membrane according to an exemplary embodiment of the present disclosure will be described.

The present disclosure provides an organic-inorganic composite membrane including: a porous matrix containing a fluorine-based copolymer and lithium-lanthanum-zirconium-based oxide particles; and a crosslinked network polymer electrolyte filling one or more pores of the porous matrix, wherein the fluorine-based copolymer contains 10 to 25 wt% of a hexafluoropropylene-derived repeating unit.

According to an exemplary embodiment, the porous matrix may be formed by uniformly mixing the fluorine-based copolymer and lithium-lanthanum-zirconium-based oxide particles, and may include a continuous phase containing the fluorine-based copolymer and a dispersed phase containing the lithium-lanthanum-zirconium-based oxide particles. The forms of the continuous phase and the dispersed phase may vary depending on the content of each component. For example, when the lithium-lanthanum-zirconium-based oxide particles are contained in an amount of 40 wt% or more, 50 wt% or more, or 60 wt% or more based on the total weight of the porous matrix, the fluorine-based copolymer may act as a binder between the particles and the oxide particles may be connected to each other, but the present disclosure is not limited thereto. The upper limit of the content of the lithium-lanthanum-zirconium-based oxide particles is not particularly limited, but may be 90 wt% or less, 85 wt% or less, or 80 wt% or less, and may be any value between the above ranges. For example, the lithium-lanthanum-zirconium-based oxide particles may be contained in an amount of 40 to 90 wt% or 50 to 90 wt% based on the total weight of the porous matrix.

According to an exemplary embodiment, the fluorine-based copolymer is not particularly limited as long as it is a fluorine-based copolymer containing a hexafluoropropylene-derived repeating unit, and the hexafluoropropylene-derived repeating unit may be contained in the fluorine-based copolymer in an amount of more than 5 wt%, 6 wt% or more, 10 wt% or more, 15 wt% or more, less than 35 wt%, 34 wt% or less, 33 wt% or less, 32 wt% or less, 31 wt% or less, 30 wt% or less, or 25 wt% or less, or at any value within the above ranges. For example, the hexafluoropropylene-derived repeating unit may be contained in an amount of more than 5 wt% and less than 35 wt%, 6 to 34 wt%, 7 to 33 wt%, 8 to 32 wt%, 9 to 31 wt%, 10 to 30 wt%, 10 to 25 wt%, or 15 to 25 wt%. When the above range is satisfied, compatibility with oxide particles may be improved, thereby achieving excellent film formability. In addition, the oxide particles may be contained in an amount of 40 wt% or more or 40 to 90 wt%.

According to an exemplary embodiment, the fluorine-based copolymer may include one or two or more copolymers selected from the group consisting of a polyvinylidene fluoride-hexafluoropropylene copolymer (P(VdF-co-HFP)), a tetrafluoroethylene-hexafluoropropylene copolymer, a polyvinylidene fluoride-hexafluoropropylene-tetrafluoroethylene copolymer, and an ethylene-vinylidene fluoride-hexafluoropropylene copolymer.

According to an exemplary embodiment, in addition to the above-described examples, the fluorine-based copolymer may further include other fluorine-based polymers, and, for example, may include one or two or more polymers selected from the group consisting of polyvinylidene fluoride (PVDF), polytetrafluoroethylene (PTFE), a tetrafluoroethylene-perfluoroalkyl vinyl ether copolymer (PFA), an ethylene-tetrafluoroethylene copolymer (ETFE), propylene-tetrafluoroethylene-vinylidene fluoride (PTFE-VDF), polyvinylidene fluoride-chlorotrifluoroethylene (PVdF-CTFE), a tetrafluoroethylene-chlorotrifluoroethylene copolymer (TFE/CTFE), polychlorotrifluoroethylene (PCTFE), and an ethylene-chlorotrifluoroethylene copolymer (ECTFE).

According to an exemplary embodiment, the fluorine-based copolymer may have a weight-average molecular weight (Mw) of 100,000 to 5,000,000 g/mol, 200,000 to 3,000,000 g/mol, 200,000 to 2,000,000 g/mol, or 300,000 to 1,000,000 g/mol, but is not limited thereto. In addition, the fluorine-based copolymer may have a number-average molecular weight (Mn) of 50,000 to 3,000,000 g/mol, 50,000 to 1,000,000 g/mol, or 80,000 to 500,000 g/mol, but is not limited thereto. The weight-average molecular weight (Mw) and the number-average molecular weight (Mn) are values measured using gel permeation chromatography (GPC; Alliance, Waters Corporation).

In addition, the fluorine-based copolymer may have a melting temperature (Tm) of 50 to 250°C, 60 to 170°C, or 80 to 100°C, and the melting point may be measured by differential scanning calorimetry (DSC; DSC1, Mettler-Toledo International Inc.) at a heating rate of 10 °C/min in accordance with a conventional method. When the above melting point is satisfied, the mechanical properties and flexibility of the formed organic-inorganic composite membrane may be suitably ensured.

According to an exemplary embodiment, the fluorine-based copolymer may have a Hansen solubility parameter ($\delta$) of 10 to 50 MPa$^{0.5}$, 15 to 40 MPa$^{0.5}$, or 20 to 35 MPa$^{0.5}$. For example, a polyvinylidene fluoride (PVdF) homopolymer having an HFP content of 0 wt% has a Hansen solubility parameter ($\delta$) of 23.2 MPa$^{0.5}$, and the Hansen solubility parameter ($\delta$) decreases as the HFP content increases. That is, in an exemplary embodiment of the present disclosure, when the copolymer is P(VdF-co-HFP) containing 10 to 25 wt% of a hexafluoropropylene-derived repeating unit, $\delta_D$ (dispersion force) is 16 to 17, $\delta_P$ (polarity) is 10 to 12, and $\delta_H$ (hydrogen bonding) is 8 to 10, and the Hansen solubility parameter ($\delta$) may be 23.2 MPa$^{0.5}$ or less or 21 to 23 MPa$^{0.5}$. The Hansen solubility parameter of the fluorine-based copolymer may be calculated by a method described below, or may be measured using the Hansen Solubility Parameters in Practice (HSPiP) software.

According to an exemplary embodiment, the fluorine-based copolymer may be contained in an amount of 5 wt% or more, 10 wt% or more, 15 wt% or more, 20 wt% or more, 80 wt% or less, 70 wt% or less, 60 wt% or less, 50 wt% or less, 40 wt% or less, 35 wt% or less, or 30 wt% or less, or at any value within the above ranges, based on the total weight of the porous matrix. For example, the fluorine-based copolymer may be contained in an amount of 5 to 80 wt%, 10 to 60 wt%, 10 to 50 wt%, 10 to 35 wt%, or 20 to 30 wt%, based on the total weight of the porous matrix. When the above range is satisfied, excellent film formability and impregnation properties may be ensured.

According to an exemplary embodiment, the lithium-lanthanum-zirconium-based oxide particles are particles containing lithium (Li), lanthanum (La), zirconium (Zr), and oxygen (O) elements, and may be represented by the following Chemical Formula 1:

$$[\text{Chemical Formula 1}] \qquad Li_xM_{1a}M_{2b}La_yZr_zM_{3c}O_{12}$$

wherein $5 \leq x \leq 9$, $0 \leq a \leq 4$, $0 \leq b \leq 4$, $2 \leq y \leq 4$, $1 \leq z \leq 3$, and $0 \leq c \leq 4$, and $M_1$ to $M_3$ are each independently an element selected from the group consisting of Na, Mg, Ca, Y, Ti, Hf, V, Nb, Ta, Cr, Mo, W, Mn, Co, Fe, Cu, Ag, Zn, B, Al, Ga, C, Si, and Sn.

According to an exemplary embodiment, in Chemical Formula 1, $M_1$ to $M_3$ may each independently be an element selected from the group consisting of Ti, Ta, Mo, W, Mn, Co, Fe, Cu, Ag, Zn, B, Al, Ga, and Sn.

According to an exemplary embodiment, Chemical Formula 1 may be represented by $Li_xLa_yZr_zO_{12}$, $Li_xGa_a$-$La_yZr_zO_{12}$, or $Li_xLa_yZr_zTa_cO_{12}$, where $5 \leq x \leq 9$, $0 \leq a \leq 4$, $2 \leq y \leq 4$, $1 \leq z \leq 3$, and $0 \leq c \leq 4$.

According to an exemplary embodiment, the lithium-lanthanum-zirconium-based oxide particles may be one or more selected from $Li_7La_3Zr_2O_{12}$ (LLZO), $Li_{6.25}Ga_{0.25}La_3Zr_2O_{12}$ (GLLZO), and $Li_{6.4}La_3Zr_{1.4}Ta_{0.6}O_{12}$ (LLZTO).

According to an exemplary embodiment, the lithium-lanthanum-zirconium-based oxide particles may have an average particle diameter of 0.01 to 3 $\mu$m, 0.1 to 1 $\mu$m, or 0.2 to 0.6 $\mu$m. The average particle diameter may be measured using a particle size analyzer (S3500, Microtrac Retsch GmbH) in accordance with the ISO 13320-1 standard.

According to an exemplary embodiment, the lithium-lanthanum-zirconium-based oxide particles may be contained in an amount of 20 wt% or more, 30 wt% or more, 40 wt% or more, 50 wt% or more, 60 wt% or more, 70 wt% or more, 80 wt% or more, 95 wt% or less, or 90 wt% or less, or at any value within the above ranges, based on the total weight of the porous matrix. For example, the lithium-lanthanum-zirconium-based oxide particles may be contained in an amount of 20 to 95 wt%, 40 to 90 wt%, 50 to 90 wt%, 60 to 90 wt%, 65 to 90 wt%, or 70 to 80 wt% based on the total weight of the porous matrix. When the above range is satisfied, excellent storage stability may be exhibited, and electrochemical properties such as excellent ionic conductivity may be achieved.

According to an exemplary embodiment, a weight ratio of the fluorine-based copolymer to the lithium-lanthanum-zirconium-based oxide particles in the porous matrix may be 10 to 50:50 to 90, but is not limited thereto.

According to an exemplary embodiment, the porous matrix may have a thickness of 5 $\mu$m to 100 $\mu$m, 10 $\mu$m to 80 $\mu$m, 15 um to 50 $\mu$m, or 20 $\mu$m to 30 $\mu$m, but is not limited thereto.

According to an exemplary embodiment, the porous matrix may have an average pore size of 0.01 to 1 $\mu$m, 0.1 to 0.7 $\mu$m, or 0.3 to 0.6 $\mu$m, but is not limited thereto. According to an exemplary embodiment, in the porous matrix, micropores are uniformly formed, and a polymer electrolyte described below forms lithium-ion channels, such that lithium-ion transport becomes active, thereby achieving a significant improvement in ionic conductivity.

According to an exemplary embodiment, the porous matrix may have a porosity of 10 to 90%, 20 to 80%, 30% or more, 35% or more, 40% or more, 40 to 60%, or 60% or less, but is not limited thereto. When the above porosity is satisfied, the organic-inorganic composite membrane according to an exemplary embodiment may be used to replace a conventional separator.

According to an exemplary embodiment, the organic-inorganic composite membrane includes a crosslinked network polymer electrolyte impregnated into or filling one or more micropores of the porous matrix. The crosslinked network polymer electrolyte may be a gel polymer electrolyte, which fills the micropores of the porous matrix to connect the spaces between the pores, thereby serving as a channel for lithium-ion transport and enabling the manufacture of an organic-inorganic composite membrane having significantly improved ionic conductivity.

According to an exemplary embodiment, the crosslinked network polymer electrolyte may contain a crosslinked network polymer formed by crosslinking a multifunctional monomer described below and a lithium salt. The crosslinked network polymer may be formed from a monomer containing two or more polymerizable functional groups, and, for example, may include one or more selected from an epoxy-based polymer, a vinylbased polymer, and an acrylic-based polymer.

According to an exemplary embodiment, the crosslinked network polymer electrolyte may contain a lithium salt, and the crosslinked network polymer electrolyte may contain an acrylic-based polymer and a lithium salt. For example, the acrylic-based polymer may be formed from acrylic-based monomers such as trimethylolpropane ethoxylate triacrylate (TMPETA), trimethylolpropane trimethacrylate (TMPTMA), trimethylolpropane triacrylate (TMPTA), and tetramethylolmethane tetraacrylate (TMMTA), but is not limited thereto. The lithium salt may serve as a source of lithium ions in the battery, thereby enabling the basic operation of the lithium secondary battery and facilitating the transport of lithium ions between a positive electrode and a negative electrode. Non-limiting examples of the lithium salt include, but are not limited to, $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (where x and y are natural numbers), $LiCl$, $LiI$, $LiB(C_2O_4)_2$, or a combination thereof. The lithium salt may be used in a concentration of 0.1 M to 5.0 M, 0.1 M to 2.0 M, or 0.5 M to 1.0 M, but is not limited thereto.

According to an exemplary embodiment, the crosslinked network polymer electrolyte may further include a liquid organic electrolyte, and any liquid organic electrolyte that is conventionally used or known may be used without particular limitation. However, the organic electrolyte may not include a fluorine-based organic electrolyte.

According to an exemplary embodiment, the liquid organic electrolyte may include a carbonate-based solvent, an esterbased solvent, an ether-based solvent, a ketone-based solvent, an alcohol-based solvent, or an aprotic solvent, and the solvent may be used alone or in combination of two or more kinds. When two or more kinds of solvents are used in combination, a mixing ratio may be appropriately adjusted depending on the desired battery performance. For example, one or two or more solvents may be selected from the group consisting of ethylene carbonate (EC), propylene carbonate (PC), diethyl carbonate (DEC), dimethyl carbonate (DMC), ethyl methyl carbonate (EMC), dipropyl carbonate (DPC), methyl propyl carbonate (MPC), ethyl propyl carbonate (EPC), and butylene carbonate (BC), and any solvent known in the art may also be used, but the present disclosure is not limited thereto.

According to an exemplary embodiment, the organic electrolyte may further include, if necessary, pyridine, triethyl phosphate, triethanolamine, cyclic ether, ethylenediamine, n-glyme, hexamethylphosphoramide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, and aluminum trichloride to improve charge and discharge characteristics, flame-retardant properties, or the like. In some cases, the organic electrolyte may further include halogen-containing solvents such as carbon tetrachloride and trifluoroethylene to impart nonflammability, and may further include fluoroethylene carbonate (FEC), propene sultone (PRS), and fluoropropylene carbonate (FPC) to improve high-temperature storage characteristics.

According to an exemplary embodiment, the crosslinked network polymer electrolyte may be contained in an amount of 5 to 100 parts by weight, 10 to 80 parts by weight, or 20 to 70 parts by weight based on 100 parts by weight of the porous matrix. When the above range is satisfied, film formability, impregnation properties, and ionic conductivity may be significantly improved.

According to an exemplary embodiment, the organic-inorganic composite membrane may have excellent surface properties compared with conventional membranes. Here, the surface properties may be identified through the appearance of the organic-inorganic composite membrane or the high-rate characteristics of a battery manufactured using the organic-inorganic composite membrane. As the organic-inorganic composite membrane is manufactured by a manufacturing method described below, side reactions between the oxide particles and the solvent may be minimized, such that the membrane may be independently formed as a free-standing membrane having excellent surface properties and favorable mechanical properties, and may have uniform micropores. When side reactions between the oxide particles and the solvent occur excessively, the viscosity of the slurry composition may rapidly increase, resulting in poor film formability, such that a film cannot be formed, and the pore structure may become irregular. As a result, lithium-ion transport is restricted, causing the battery to exhibit unstable and insufficient charge and discharge characteristics during high-rate operation. However, the organic-inorganic composite membrane according to an exemplary embodiment exhibits excellent film formability because it is manufactured using a solvent under specific conditions, thereby effectively suppressing side reactions with the oxide particles. In addition, the composite membrane is manufactured by using a fluorine-based copolymer containing a specific amount of a specific repeating unit together with the solvent through a manufacturing method described below, such that improvements in the dispersibility of the oxide particles, the formation of uniform micropores, and the like may be achieved. In addition, a lithium secondary battery manufactured using the organic-inorganic composite membrane may achieve excellent battery performance and high-rate characteristics, as lithium-ion transport becomes more active.

Hereinafter, a slurry composition for manufacturing an organic-inorganic composite membrane according to an exemplary embodiment will be described in detail.

In an exemplary embodiment of the present disclosure, there is provided a slurry composition for manufacturing the porous matrix of an organic-inorganic composite membrane, the slurry composition containing a fluorine-based copolymer containing 10 to 25 wt% of a hexafluoropropylene-derived repeating unit, lithium-lanthanum-zirconium-based oxide particles, a first solvent, and a second solvent, wherein the second solvent has a lower polarity than the first solvent.

In an exemplary embodiment of the present disclosure, there is provided a slurry composition for manufacturing the porous matrix of an organic-inorganic composite membrane, the slurry composition containing a fluorine-based copolymer containing 10 to 25 wt% of a hexafluoropropylene-derived repeating unit, lithium-lanthanum-zirconium-based oxide particles, a first solvent, and a second solvent, wherein the second solvent has a lower polarity than the first solvent, and the first solvent and the second solvent have different boiling points.

The above-described organic-inorganic composite membrane may be manufactured using the slurry composition for manufacturing an organic-inorganic composite membrane.

According to an exemplary embodiment, in order to form a free-standing membrane using the lithium-lanthanum-zirconium-based oxide particles and the fluorine-based copolymer containing 10 to 25 wt% of a hexafluoropropylene-derived repeating unit, it is preferable to use a first solvent and a second solvent having different polarities. For example, the first solvent may be a solvent that may readily dissolve the fluorine-based copolymer because its Hansen solubility parameter is relatively close to that of the fluorine-based copolymer, and has a low boiling point so that it may evaporate rapidly. In addition, the second solvent may have a lower polarity than the first solvent and a higher boiling point than the first solvent.

In addition, the polarity of each of the first solvent and the second solvent may be expressed by a Hansen solubility parameter, may be expressed by $\delta_P$ representing polarity in the Hansen solubility parameters, and may also be expressed in terms of dipole moment or dielectric constant.

According to an exemplary embodiment, the slurry composition for manufacturing an organic-inorganic composite membrane contains a fluorine-based copolymer, lithium-lanthanum-zirconium-based oxide particles, a first solvent, and a second solvent, and detailed descriptions of the fluorine-based copolymer and the lithium-lanthanum-zirconium-based oxide particles will be omitted since they are the same as described above.

According to an exemplary embodiment, the first solvent may have a higher polarity than the second solvent, and may thus serve as a good solvent that dissolves the fluorine-based copolymer more effectively. In addition, the second solvent may have a lower polarity than the first solvent and may thus serve as a non-solvent. The polarity may be identified from the $\delta_P$ parameter representing polarity in the Hansen solubility parameters, or may be identified from a dipole moment or a dielectric constant. For example, the difference in $\delta_P$ may be 3 or more, for example, about 3 to 8.

In addition, the first solvent and the second solvent may have different polarities and different boiling points, and the porous matrix may be manufactured by utilizing a phase separation phenomenon. For example, the first solvent may have a higher polarity and a lower boiling point than the second solvent, and may thus serve as a good solvent that dissolves the fluorine-based copolymer more effectively. In addition, the second solvent may have a lower polarity and a higher boiling point than the first solvent, and may thus serve as a non-solvent. According to an exemplary embodiment, the first solvent may have a Hansen solubility parameter ($O_{Ts1}$) of 18 to 25 MPa$^{0.5}$, 18.5 to 23 MPa$^{0.5}$, or 19.0 to 20 MPa$^{0.5}$. When the above range is satisfied, a free-standing membrane may be formed, and the electrolyte impregnation properties are improved, thereby achieving excellent ionic conductivity and high-rate characteristics.

According to an exemplary embodiment, the first solvent may have a difference in Hansen solubility parameter from that of the fluorine-based copolymer of 1 MPa$^{0.5}$ or more and less than 15 Mpa$^{0.5}$, 1 to 14 MPa$^{0.5}$, 1 to 10 MPa$^{0.5}$, 1 to 8 MPa$^{0.5}$, 1.5 to 8 MPa$^{0.5}$, 1.5 to 5 MPa$^{0.5}$, or 1.5 to 3.5 MPa$^{0.5}$. When the above range is satisfied, the solubility with the fluorine-based copolymer may be improved. The Hansen solubility parameter may be calculated according to a method described below and may be verified using the Hansen Solubility Parameters in Practice (HSPiP) software.

According to an exemplary embodiment, the first solvent may have a boiling point of 110°C or lower, 0 to 80°C, 10 to 80°C, or 20 to 70°C.

According to an exemplary embodiment, the first solvent may have a vapor pressure at room temperature of 25 mmHg or more or 50 to 150 mmHg.

According to an exemplary embodiment, the first solvent and the second solvent may each have a dipole moment of 2.8 Debye (D) or less and a dielectric constant of 20 or less. For example, the dipole moment may be 0 to 2 Debye (D), and the dielectric constant may be 1 to 20.

According to an exemplary embodiment, the first solvent may have a dipole moment of 0.1 to 10 D, 0.5 to 5 D, or 1 to 2.5 D.

According to an exemplary embodiment, the first solvent may have a dielectric constant of 1 to 20, 2 to 15, or 5 to 10. When the first solvent satisfying the above ranges is used, the first solvent may appropriately interact with the fluorine-based copolymer to prepare a slurry composition capable of forming a free-standing membrane.

According to an exemplary embodiment, the second solvent may have a dipole moment of 0 to 2.85 Debye (D), 0 to 2 Debye (D), 0 to 1.5 Debye (D), or 0 to 1 Debye (D).

According to an exemplary embodiment, the second solvent may have a dielectric constant of 1 to 20, 1 to 10, or 1 to 5.

According to an exemplary embodiment, the first solvent may be a polar organic solvent, a polar protic organic solvent, a polar aprotic organic solvent, or a mixture thereof. Non-limiting examples of the polar organic solvent include, but are not limited to, N-methyl-2-pyrrolidone (NMP), N,N-dimethylformamide (DMF), dimethyl sulfoxide (DMSO), cyclohexylpyrrolidinone (CHP), N-dodecyl-pyrrolidone (N12P), benzyl benzoate, N-octyl-pyrrolidone (N8P), dimethylimidazolidinone (DMEU), cyclohexanone, dimethylacetamide (DMA), N-methylformamide (NMF), bromobenzene, chloroform, chlorobenzene, benzonitrile, quinoline, benzyl ether, ethanol, isopropyl alcohol, methanol, butanol, 2-ethoxyethanol, 2-butoxyethanol, 2-methoxypropanol, tetrahydrofuran (THF), ethylene glycol, pyridine, N-vinylpyrrolidone, methyl ethyl ketone (butanone), $\alpha$-terpineol, formic acid, ethyl acetate, and acrylonitrile.

According to an exemplary embodiment, the first solvent may be an ether-based organic solvent. The ether-based organic solvent may be an acyclic ether-based organic solvent, a cyclic ether-based organic solvent, or a mixture thereof, or may be a cyclic ether-based organic solvent. Non-limiting examples of the ether-based organic solvent include 1,2-dimethoxyethane, 1,2-diethoxyethane, 1,2-dibutoxyethane, diethylene glycol dimethyl ether, diethylene glycol diethyl ether, triethylene glycol dimethyl ether, triethylene glycol diethyl ether, tetraethylene glycol dimethyl ether, tetraethylene glycol diethyl ether, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxybenzene, 1,3-dimethoxybenzene, 1,4-dimethoxybenzene, and isosorbide dimethyl ether.

According to an exemplary embodiment, the second solvent may have a Hansen solubility parameter ($\delta_{TS2}$) of 17 MPa$^{0.5}$ or less, 1 to 17 MPa$^{0.5}$, 7 to 17 MPa$^{0.5}$, or 10 to 17 MPa$^{0.5}$. When the above range is satisfied, a free-standing membrane may be formed, and the electrolyte impregnation properties are improved, thereby achieving excellent ionic conductivity and high-rate characteristics.

According to an exemplary embodiment, the second solvent may have a boiling point of 100°C or higher, 100 to 300°C, or 110 to 230°C. For example, the second solvent and the first solvent may have different boiling points, and a difference in boiling point may be 50°C or higher, for example, 50 to 200°C.

According to an exemplary embodiment, the second solvent may have a vapor pressure at room temperature of 15 mmHg or less or 0.05 to 10 mmHg.

According to an exemplary embodiment, the second solvent may have a dipole moment of 0 to 2 D, 0 to 1 D, or 0 to 0.5 D.

According to an exemplary embodiment, the second solvent may have a dielectric constant of 0.1 to 10, 0.5 to 5, or 0.5 to 3.

According to an exemplary embodiment, the second solvent may be a hydrocarbon-based organic solvent, or may be one or a combination of two or more selected from the group consisting of aliphatic hydrocarbon-based organic solvents such as hexane, octane, and heptane; alicyclic hydrocarbon-based organic solvents such as cyclohexane, cyclohexene, ethylcyclohexane, methylcyclohexane, and methylcyclohexene; and aromatic hydrocarbon-based organic solvents such as benzene, toluene, xylene, ethylbenzene, diethylbenzene, trimethylbenzene, and triethylbenzene.

According to an exemplary embodiment, the hydrocarbon-based organic solvent may be a $C_{3-30}$ hydrocarbon-based organic solvent or a $C_{5-12}$ hydrocarbon-based organic solvent. Alternatively, the second solvent may be one or a combination of two or more selected from the group consisting of pentane, hexane, heptane, octane, nonane, decane, undecane, and dodecane.

According to an exemplary embodiment, the Hansen solubility parameter ($\delta_{Ts1}$) of the first solvent, the Hansen solubility parameter ($\delta_{TS2}$) of the second solvent, and the Hansen solubility parameter ($\delta_{Tm}$) of the fluorine-based copolymer may satisfy $\delta_{TS2} < \delta_{Ts1}$, $\delta_{TS2} \leq \delta_{Tm}$ - 5.9 MPa$^{0.5}$ < $\delta_{Ts1}$, or $\delta_{TS2} \leq \delta_{Tm}$ - 3.7 MPa$^{0.5}$ < $\delta_{Ts1}$.

According to an exemplary embodiment, the weight ratio of the first solvent to the second solvent may be 0.1 to 100:1, 1 to 80:1, 5 to 50:1, or 10 to 30:1. When the above ranges are satisfied, both film formability and impregnation properties may be improved, thereby enabling the manufacture of an organic-inorganic composite membrane having excellent battery characteristics.

According to an exemplary embodiment, the fluorine-based copolymer may be contained in an amount of 1 to 50 parts by weight, 3 to 30 parts by weight, or 5 to 20 parts by weight based on 100 parts by weight of the first solvent.

According to an exemplary embodiment, the fluorine-based copolymer may be contained in an amount of 5 to 100 parts by weight, 10 to 60 parts by weight, or 15 to 45 parts by weight based on 100 parts by weight of the lithium-lanthanum-zirconium-based oxide particles.

According to an exemplary embodiment, the slurry composition for manufacturing an organic-inorganic composite membrane may have a solid content of 10 to 70 wt%, 15 to 50 wt%, or 25 to 45 wt% based on the dry weight.

The above-described slurry composition for manufacturing an organic-inorganic composite membrane may be used to manufacture the above-described organic-inorganic composite membrane. The organic-inorganic composite membrane may effectively suppress side reactions by using a solvent satisfying the above conditions together with lithium-lanthanum-zirconium-based oxide particles, and a matrix in which the oxide particles are uniformly dispersed may be manufactured by using a fluorine-based copolymer containing a specific amount of a hexafluoropropylene (HFP)-derived repeating unit together with the solvent, based on excellent solubility.

According to an exemplary embodiment, the organic-inorganic composite membrane may have an ionic conductivity of $1 \times 10^{-5}$ S/cm or more, $1 \times 10^{-4}$ S/cm or more, $5 \times 10^{-4}$ S/cm or more, $7 \times 10^{-4}$ S/cm or more, $9 \times 10^{-4}$ S/cm or more, or $1 \times 10^{-3}$ S/cm or more. Although the upper limit of the ionic conductivity is not particularly limited, the ionic conductivity may be $1 \times 10^{-2}$ S/cm or less or $5 \times 10^{-4}$ to $1 \times 10^{-2}$ S/cm.

The present disclosure may provide a lithium secondary battery including the above-described organic-inorganic composite membrane. The lithium secondary battery is not particularly limited in type, and a non-limiting example thereof may be a lithium-ion battery. The lithium-ion battery is well known, and its configuration is also known; therefore, detailed descriptions thereof will be omitted in the present disclosure.

The lithium secondary battery according to an exemplary embodiment may use the organic-inorganic composite membrane according to an exemplary embodiment between a positive electrode and a negative electrode. In this case, the positive electrode and the negative electrode are not particularly limited as long as they are those generally used in lithium secondary batteries. The organic-inorganic composite membrane according to an exemplary embodiment may replace a separator and may simultaneously serve as both an electrolyte and a separator.

The lithium secondary battery according to an exemplary embodiment may have excellent lifespan characteristics, and may have a capacity retention rate of 80% or more, 85% or more, 90% or more, or 99.9% or less, as measured after 200 cycles according to an evaluation method described below, but is not limited thereto.

The lithium secondary battery according to an exemplary embodiment may have excellent high-rate characteristics, and may have a discharge capacity of 50 mAh/g or more, 90 mAh/g or more, 100 mAh/g or more, 120 mAh/g or more, or 200 mAh/g or less, as measured at 2 C according to an evaluation method described below, but is not limited thereto.

Hereinafter, a method for manufacturing an organic-inorganic composite membrane according to an exemplary embodiment will be described in detail.

The present disclosure may provide a method for manufacturing an organic-inorganic composite membrane, the method including: (S1) preparing a slurry composition for manufacturing an organic-inorganic composite membrane, the slurry composition containing a fluorine-based copolymer, lithium-lanthanum-zirconium-based oxide particles, a first solvent, and a second solvent; (S2) forming a porous matrix by applying and drying the composition; and (S3) impregnating a multifunctional monomer composition into the porous matrix and performing curing to form a crosslinked network polymer electrolyte, wherein the fluorine-based copolymer contains 10 to 25 wt% of a hexafluoropropylene-derived repeating unit. Since the fluorine-based copolymer, the lithium-lanthanum-zirconium-based oxide particles, the porous matrix, the crosslinked network polymer, and the slurry composition for manufacturing an organic-inorganic composite membrane are the same as described above, descriptions thereof will be omitted.

According to an exemplary embodiment, the step (S1) may include (a) dissolving the fluorine-based copolymer in the first solvent; and (b) mixing the lithium-lanthanum-zirconium-based oxide particles and the second solvent. The fluorine-based copolymer may be dissolved in the first solvent in an amount of 1 to 50 wt% or 5 to 20 wt%. After complete dissolution, the lithium-lanthanum-zirconium-based oxide particles and the second solvent may be added and stirred. The stirring may be performed using a conventionally used or known method.

According to an exemplary embodiment, the porous matrix may be formed by a method conventionally used or known for manufacturing a porous membrane, and specifically, a dry phase inversion method may be used.

According to an exemplary embodiment, the step (S2) may be divided into a step of applying the prepared slurry composition and a step of drying the applied slurry composition, and the application may be performed without particular limitation by using a coating or application method that is conventionally used or known. Examples thereof include, but are not limited to, spin coating, dip coating, ink-jet printing, spray coating, screen printing, drop casting, and doctor blade methods. In addition, the coating amount may be easily adjusted depending on the desired thickness of the electrolyte membrane to be manufactured.

According to an exemplary embodiment, the slurry composition may be applied to an electrode or a release film.

According to an exemplary embodiment, in the step (S2), the drying step may include a step of drying the first solvent of the slurry composition at a first drying temperature (hereinafter, referred to as "primary drying") and a step of drying the second solvent of the slurry composition at a second drying temperature (hereinafter, referred to as "secondary drying").

According to an exemplary embodiment, the second drying temperature may be higher than the first drying temperature. The first drying temperature and the second drying temperature may vary depending on the types and boiling points of the first solvent and the second solvent. The primary drying is a step in which the first solvent is dried, and the first drying temperature may be, for example, 0 to 80°C, 10 to 50°C, or room temperature (20 to 25°C). The secondary drying is a step in which the second solvent is dried, and the second drying temperature may be equal to or higher than the boiling point of the first solvent. For example, the second drying temperature may be 70 to 300°C, 80 to 300°C, 90 to 150°C, or 100 to 130°C. Through the step (S2), a porous matrix satisfying the above-described physical properties may be formed.

According to an exemplary embodiment, the step (S3) may include a step of preparing a multifunctional monomer composition and impregnating the prepared multifunctional monomer composition into the porous matrix, and a step of performing curing.

According to an exemplary embodiment, the multifunctional monomer composition may contain a multifunctional acrylic-based monomer, an initiator, and a lithium salt. The multifunctional acrylic-based monomer may be an acrylic-based monomer containing two or more acrylic functional groups, and may specifically be one or a combination of two or more selected from a diacrylate monomer, a triacrylate monomer, and a tetraacrylate monomer. Non-limiting examples of the multifunctional acrylic-based monomer include, but are not limited to, poly(ethylene glycol) diacrylate, poly(propylene glycol) diacrylate (PPGDA), poly(ethylene glycol) dimethacrylate, trimethylolpropane triacrylate, trimethylolpropane ethoxylate triacrylate, dipentaerythritol penta-/hexa-acrylate, and pentaerythritol tetraacrylate.

According to an exemplary embodiment, the multifunctional acrylic-based monomer may be contained in an amount of 1 to 50 wt% or 2 to 30 wt% based on the total weight of the multifunctional monomer composition.

According to an exemplary embodiment, the initiator is not particularly limited as long as it may initiate curing by light or heat, and may be appropriately selected depending on the type of the multifunctional monomer. Examples thereof include, but are not limited to, tert-butyl peroxy pivalate (t-bpp), benzoyl peroxide (BPO), and azobisisobutyronitrile (AIBN). The content of the initiator may be 0.5 to 2 wt% based on the content of the multifunctional acrylic-based monomer, and, for example, the initiator may be contained in an amount of 0.01 to 10 wt% or 0.05 to 5 wt% based on the total weight of the multifunctional monomer composition.

According to an exemplary embodiment, the multifunctional monomer composition may further contain the above-described liquid organic electrolyte. In this case, the liquid organic electrolyte may be contained in an amount of 50 to 99 wt% or 70 to 98 wt% based on the total weight of the multifunctional monomer composition.

According to an exemplary embodiment, the method of impregnating the multifunctional monomer composition into the matrix is not particularly limited, and the impregnation may be performed by any method conventionally used in the art. The known method may be easily selected and performed, detailed conditions thereof are well known, and thus, a detailed description thereof will be omitted in the present disclosure.

According to an exemplary embodiment, the multifunctional monomer composition may be injected into the above-described porous matrix and cured to prepare a crosslinked network polymer electrolyte filling one or more pores of the porous matrix. The multifunctional monomer composition may be injected or impregnated according to conventional or known methods used in the art. Through this, the multifunctional monomer may be crosslinked to form a network polymer, and a crosslinked network polymer electrolyte, in which a lithium salt or a lithium salt and an organic electrolyte are filled between the network polymers, may be formed.

Hereinafter, the present disclosure will be described in more detail based on the following Examples and Comparative Examples. However, the following Examples and Comparative Examples are only examples for explaining the present disclosure in more detail, and the present disclosure is not limited by the following Examples and Comparative Examples.

First, the methods for measuring and evaluating the physical properties of the separator will be described.

(Methods for Evaluating Physical Properties)

1. Electrolyte Uptake (%)

A liquid electrolyte was impregnated into each of the porous matrices manufactured in the Examples and Comparative Examples, and the liquid electrolyte uptake (%) was measured according to the following Calculation Formula 1. The results are shown in Table 2. As the liquid electrolyte, a solution obtained by dissolving 1.0 M $LiPF_6$ in a mixed solvent in which a volume ratio of EC to EMC was 3:7 and which contained 5 wt% FEC was used.

```
[Calculation Formula 1]

Liquid electrolyte uptake (%) = (W - W₀)/W₀ X 100
```

$W_0$ represents the weight (mg) of the porous matrix before impregnation with the liquid electrolyte, and W represents the weight (mg) of the porous matrix after impregnation with the liquid electrolyte.

2. Ionic Conductivity [S/cm]

The organic-inorganic composite membranes manufactured in the Examples and Comparative Examples were interposed between stainless steel plates (thickness: 1 mm) to manufacture coin-type cells. The manufactured cells were subjected to electrochemical impedance spectroscopy (EIS) analysis (measurement conditions: frequency range of 1.0 MHz to 0.1 Hz and amplitude potential of 10 mV), and the ionic conductivity was measured according to the following Calculation Formula 2. The results are shown in Table 3.

$$[\text{Calculation Formula 2}]$$

$$\text{Ionic conductivity (S/cm)} = L / (R \times A)$$

R represents the resistance ($\Omega$) obtained from the impedance measurement, L represents the thickness (cm) of the sample (electrolyte layer), and A represents the area ($cm^2$) of the sample.

3. Evaluation of Lifespan Characteristics and High-Rate Characteristics

The organic-inorganic composite membranes manufactured in the Examples and Comparative Examples were interposed between stainless steel plates (thickness: 1 mm) to manufacture coin-type cells, and the discharge capacity was evaluated.

The coin-type cell is composed of a graphite negative electrode, an organic-inorganic composite membrane, and a $LiNi_{0.8}Mn_{0.1}Co_{0.1}O_2$ positive electrode. The negative electrode and the positive electrode used were manufactured as described below.

Graphite as a negative electrode active material, styrene-butadiene rubber (SBR) and carboxymethyl cellulose (CMC) as binders, and carbon black as a conductive agent were mixed at a weight ratio of 96:3:1, thereby preparing a negative electrode slurry. The negative electrode slurry was uniformly applied onto a Cu foil to a thickness of 10 $\mu$m, and then, drying and rolling were performed, thereby manufacturing a negative electrode.

$LiNi_{0.8}Mn_{0.1}Co_{0.1}O_2$ powder as a positive electrode active material and carbon black were uniformly mixed at a weight ratio of 90:5, and then, a polyvinylidene fluoride (PVDF) solution as a binder was added so that the weight ratio of the positive electrode active material, the carbon-based conductive agent, and the binder was 90:5:5, thereby preparing a slurry for forming a positive electrode active material layer. The prepared slurry was coated onto an aluminum substrate serving as a positive electrode current collector having a thickness of 12 $\mu$m using a doctor blade, drying was performed under reduced pressure at 120°C, and then, rolling was performed using a roll press to form a sheet, thereby manufacturing a positive electrode having a positive electrode current collector and a positive electrode active material layer.

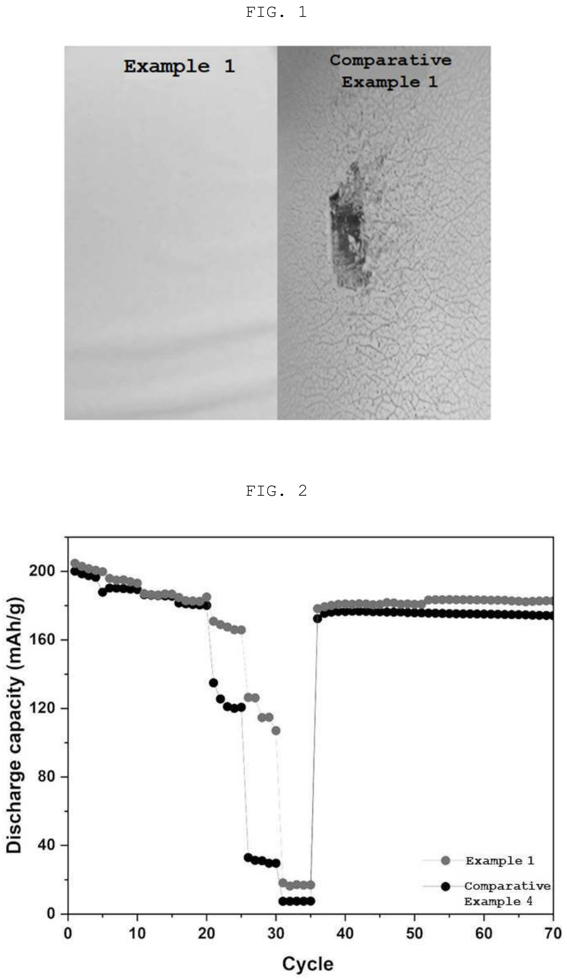

The manufactured coin-type cells were charged and discharged five times each at a voltage range of 2.5 V to 4.2 V under current densities of 0.1 C, 0.2 C, 0.3 C, 0.5 C, 1.0 C, 2.0 C, and 5.0 C to observe the changes. The discharge capacities [mAh/g] at 0.1 C and 2.0 C, and the discharge capacity (%) at 2 C relative to that at 0.1 C were measured. The results are shown in Table 3. Subsequently, charge and discharge were performed 70 times under a charge/discharge condition of 0.5 C, and changes in the discharge capacity measured in each cycle were observed. In addition, a graph showing changes in the discharge capacity [mAh/g] with the number of cycles for Example 1 and Comparative Example 4 is illustrated in FIG. 2.

4. Determination of Hexafluoropropylene-Derived Repeating Unit Content in Fluorine-Based Copolymer

20 mg of a PVDF-HFP copolymer sample was prepared and mixed with 1 mL of THF-$d_8$ (tetrahydrofuran) or acetone-$d_6$ with stirring until completely dissolved. The sample was transferred into a fluorine-19 nuclear magnetic resonance ($^{19}F$ NMR) tube, and the $^{19}F$ NMR spectrum was measured using a 400 MHz NMR spectrometer. The measurement temperature was set to 25°C.

In the measured $^{19}F$ NMR spectrum, the -$CF_2$- signal of the VDF unit was observed at approximately -90 to -130 ppm, and the -$CF_3$ signal and the -CF- signal of the HFP unit were observed at approximately -68 to -80 ppm and approximately - 180 to -190 ppm, respectively. The HFP content (mol%) was determined from the peak area value of the -$CF_3$ signal, and the determined content was converted into a mass ratio (wt%).

5. Hansen Solubility Parameters (HSP)

The Hansen solubility parameters are parameters representing the solubility of a specific substance, which are determined by considering the dispersion force, dipole-dipole force, and hydrogen bonding force of the specific substance, and may be expressed by the following equation.

[Equation]

$$\delta_T = \sqrt{\delta_d^2 + \delta_p^2 + \delta_h^2}$$

In the equation, $\delta_T$ represents the total Hansen solubility parameter, and each term is defined as follows. $\delta_P$ represents the dispersion parameter resulting from intermolecular dispersion forces, $\delta_p$ represents the polar parameter resulting from interactions between permanent dipoles, and $\delta_h$ represents the hydrogen bonding parameter resulting from hydrogen bonding. Herein, the unit of all solubility parameters is $MPa^{0.5}$.

6. Stability of Oxide Particles in Slurry Composition

In order to evaluate the stability of the oxide particles in the slurry compositions prepared in the Examples and Comparative Examples, phase changes after standing at room temperature for 1 hour were observed. When no change was observed after standing, the result was evaluated as "good", whereas when gelation, precipitation, or phase separation occurred, the result was evaluated as "poor".

7. Film Formability

The slurry compositions prepared in the Examples and Comparative Examples were cast onto a polyethylene terephthalate release film using a doctor blade, primary drying was performed at room temperature, and secondary drying was subsequently performed under vacuum at 80°C, thereby forming a porous matrix having a thickness of 20 $\mu$m. At this time, in order to evaluate the film formability of the slurry composition, the surface state and mechanical properties of the coated film were evaluated after casting the slurry composition.
When the surface was smoothly coated and a free-standing membrane could be formed after drying, the result was evaluated as "excellent". When a free-standing membrane could not be formed, or when the surface was remarkably rough and many pores were formed, the result was evaluated as "poor".

[Example 1]

1) Manufacture of Porous Matrix

2 g of P(VdF-co-HFP) (HFP 10 wt%), which is a fluorine-based copolymer, was added to 20 g of a first solvent (tetrahydrofuran (THF)), and dissolved at about 50°C for 1 hour. Then, 8 g of LLZTO oxide particles ($Li_{6.4}La_3Zr_{1.4}Ta_{0.6}O_{12}$) having an average particle diameter D50 of 300 nm and 1.5 g of a second solvent (dodecane) were added and stirred and ballmilled at room temperature for 24 hours to prepare a slurry composition. The weight ratio of the first solvent to the second solvent was 13.3:1, and the weight ratio of the fluorine-based copolymer to the LLZTO oxide particles was 20:80.
The stability of the oxide particles in the prepared slurry composition was evaluated. The results are shown in Table 2.
The prepared slurry composition was cast onto a polyethylene terephthalate (PET) release film using a doctor blade, primary drying was performed at room temperature, and secondary drying was subsequently performed under vacuum at 80°C, thereby forming a porous matrix having a thickness of 20 $\mu$m. At this time, the film formability and liquid electrolyte impregnation properties of the slurry composition were evaluated. The results are shown in Table 2.

2) Manufacture of Organic-Inorganic Composite Membrane

After the multifunctional monomer composition was impregnated into the porous matrix, a thermal curing process was performed at 70°C for 1 hour to finally obtain an organic-inorganic composite membrane having a thickness of 20 $\mu$m. The multifunctional monomer composition was composed of 94.95 wt% of a liquid electrolyte, 5 wt% of a trimethylolpropane ethoxylate triacrylate (TMPETA) monomer, and 0.05 wt% of tert-butyl peroxy pivalate (t-BPP) serving as a thermal curing initiator. As the liquid electrolyte, a solution obtained by dissolving 1.0 M LiPF$_6$ in a mixed solvent in which a volume ratio of EC to EMC was 3:7 and which contained 5 wt% FEC was used.

The ionic conductivity of the manufactured organic-inorganic composite membrane and discharge capacity were evaluated. The results are shown in Table 3.

[Example 2]

An organic-inorganic composite membrane was manufactured in the same manner as in Example 1, except that P(VdF-co-HFP) (HFP 15 wt%) was used as the fluorine-based copolymer. The stability of the oxide particles in the slurry composition, the film formability of the slurry composition, and the liquid electrolyte impregnation properties were evaluated. The results are shown in Table 2. In addition, the ionic conductivity of the manufactured organic-inorganic composite membrane and discharge capacity were evaluated. The results are shown in Table 3.

[Example 3]

An organic-inorganic composite membrane was manufactured in the same manner as in Example 1, except that P(VdF-co-HFP) (HFP 25 wt%) was used as the fluorine-based copolymer. The stability of the oxide particles in the slurry composition, the film formability of the slurry composition, and the liquid electrolyte impregnation properties were evaluated. The results are shown in Table 2. In addition, the ionic conductivity of the manufactured organic-inorganic composite membrane and discharge capacity were evaluated. The results are shown in Table 3.

[Example 4]

An organic-inorganic composite membrane was manufactured in the same manner as in Example 1, except that 5 g of the fluorine-based copolymer and 5 g of the LLZTO oxide particles were used, and the solid content of the LLZTO oxide particles was adjusted to 50 wt%. The stability of the oxide particles in the slurry composition, the film formability of the slurry composition, and the liquid electrolyte impregnation properties were evaluated. The results are shown in Table 2. In addition, the ionic conductivity of the manufactured organic-inorganic composite membrane and discharge capacity were evaluated. The results are shown in Table 3.

[Example 5]

An organic-inorganic composite membrane was manufactured in the same manner as in Example 1, except that 1 g of the fluorine-based copolymer and 9 g of the LLZTO oxide particles were used, and the solid content of the LLZTO oxide particles was adjusted to 90 wt%. The stability of the oxide particles in the slurry composition, the film formability of the slurry composition, and the liquid electrolyte impregnation properties were evaluated. The results are shown in Table 2. In addition, the ionic conductivity of the manufactured organic-inorganic composite membrane and discharge capacity were evaluated. The results are shown in Table 3.

[Comparative Example 1]

The procedure was performed in the same manner as in Example 1, except that P(VdF-co-HFP) (HFP 5 wt%) was used as the fluorine-based copolymer. The stability of the oxide particles in the slurry composition, the film formability of the slurry composition, and the liquid electrolyte impregnation properties were evaluated. The results are shown in Table 2. In addition, the ionic conductivity of the manufactured organic-inorganic composite membrane and discharge capacity were evaluated. The results are shown in Table 3.

However, the fluorine-based copolymer was not well dissolved in the first solvent, and film formation was inadequate.

[Comparative Example 2]

The procedure was performed in the same manner as in Example 1, except that P(VdF-co-HFP) (HFP 35 wt%) was used as the fluorine-based copolymer. The stability of the oxide particles in the slurry composition, the film formability of the slurry composition, and the liquid electrolyte impregnation properties were evaluated. The results are shown in Table 2. In addition, the ionic conductivity of the manufactured organic-inorganic composite membrane and discharge capacity were evaluated. The results are shown in Table 3.

[Comparative Example 3]

The procedure was performed in the same manner as in Example 1, except that acetone was used as the first solvent. The stability of the oxide particles in the slurry composition, the film formability of the slurry composition, and the liquid electrolyte impregnation properties were evaluated. The results are shown in Table 2. In addition, the ionic conductivity of the manufactured organic-inorganic composite membrane and discharge capacity were evaluated. The results are shown in Table 3.

However, a reaction occurred between the LLZTO oxide particles and the solvent, resulting in gelation of the slurry composition, which made the manufacture of the film impossible.

[Comparative Example 4]

The procedure was performed in the same manner as in Example 1, except that the LLZTO oxide particles were not added. The stability of the oxide particles in the slurry composition, the film formability of the slurry composition, and the liquid electrolyte impregnation properties were evaluated. The results are shown in Table 2. In addition, the ionic conductivity of the manufactured organic-inorganic composite membrane and discharge capacity were evaluated. The results are shown in Table 3.

[Table 1]

| | Fluorine-based copolymer | | First solvent | | | Second solvent | | |
|---|---|---|---|---|---|---|---|---|
| | HFP content (wt%) | $\delta_{Tm}$ [MPa$^{0.5}$] | Type | $\delta_{Ts1}$ (MPa$^{0.5}$) | Boiling point (°C) | Type | $\delta_{Ts2}$ (MPa$^{0.5}$) | Boiling point (°C) |
| Example 1 | 10 | 22.7 | THF | 19.5 | 66 | Dodecane | 16.0 | 216 |
| Example 2 | 15 | 22.4 | THF | 19.5 | 66 | Dodecane | 16.0 | 216 |
| Example 3 | 25 | 21.9 | THF | 19.5 | 66 | Dodecane | 16.0 | 216 |
| Example 4 | 10 | 22.7 | THF | 19.5 | 66 | Dodecane | 16.0 | 216 |
| Example 5 | 10 | 22.7 | THF | 19.5 | 66 | Dodecane | 16.0 | 216 |
| Comparative Example 1 | 5 | 22.9 | THF | 19.5 | 66 | Dodecane | 16.0 | 216 |
| Comparative Example 2 | 35 | 21.4 | THF | 19.5 | 66 | Dodecane | 16.0 | 216 |
| Comparative Example 3 | 10 | 22.7 | Acetone | 20.3 | 56 | Dodecane | 16.0 | 216 |
| Comparative Example 4 | 10 | 22.7 | THF | 19.5 | 66 | Dodecane | 16.0 | 216 |

FIG. 1 shows images of coated films obtained by casting the slurry compositions prepared in Example 1 and Comparative Example 1 for evaluation of film formability. The slurry composition of Example 1 was smoothly applied on the surface, and even after drying, exhibited good mechanical properties to form a free-standing membrane. On the other hand, in the case of Comparative Example 1, the surface was remarkably rough, and many irregular pores were observed on the surface, and the slurry composition of Comparative Example 2 exhibited a good surface condition, but the mechanical properties were excessively degraded after drying, resulting in failure in film formation. In addition, in Comparative Example 3, a reaction occurred between the LLZTO oxide particles and the solvent, resulting in gelation of the slurry composition, which made the manufacture of the film impossible. The mechanical property refers to tensile strength, which was evaluated by measuring the degree to which the film withstood being pulled by hand on both sides after film formation. When the mechanical property was good, the formation of a free-standing membrane was possible.

The oxide reactivity, film formability, uptake, and ionic conductivity of the composite membranes according to Examples 1 to 5 and Comparative Example 4 were analyzed and measured. The results are shown in Table 2. However, in the cases of Comparative Examples 1 to 3, films could not be manufactured, and thus the uptake and ionic conductivity could not be measured. The film formability was evaluated as "good" when the formation of a free-standing membrane was possible, and as "poor" when the formation of a free-standing membrane was impossible.

In addition, the Hansen solubility parameter ($\delta$) of the fluorine-based copolymer P(VdF) (HFP 0 wt%) is 23.2 MPa$^{0.5}$. The tetrahydrofuran (THF) used as the first solvent in the Example has a Hansen solubility parameter ($\delta$) of 19.5. Among the Hansen solubility parameters, $\delta_P$ representing the polarity is 5.7, $\delta_D$ representing the dispersion force is 16.8, and $\delta_H$ representing hydrogen bonding is 8.0. In addition, the dipole moment and dielectric constant are 1.75 D and 7.6, respectively.

In the case of acetone used in Comparative Example 3, the Hansen solubility parameter ($\delta$) is 20.3; however, the polarity ($\delta_P$ = 10.4) is very strong, the dipole moment and dielectric constant are 2.88 D and 20.7, respectively, indicating excessively high polarity. As a result, side reactions of the oxide particles occurred in the slurry, leading to a decrease in slurry storage stability and failure in film formation.

[Table 2]

| | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Oxide particle stability | Good | Good | Good | Good | Good | Good | Good | Poor | - |
| Film formability | Excellent | Excellent | Excellent | Excellent | Excellent | Poor | Poor | Poor | Excellent |
| Liquid electrolyte uptake (%) | 40.30 | 51.93 | 61.4 | 36.0 | 60.4 | - | - | - | 35.0 |

As shown in Table 2, in the cases of Examples 1 to 5, the oxide reactivity was favorable, the film formability was excellent, and a high ionic conductivity was exhibited. In addition, when octane or decane was used instead of dodecane in Example 1, the stability of the oxide particles was favorable, the film formability was excellent, and the liquid electrolyte uptake and ionic conductivity exhibited values similar to those of Example 1.

From the above results, it was confirmed that, by using a combination of a fluorine-based copolymer containing 10 to 25 wt% of a hexafluoropropylene-derived repeating unit and a specific solvent, the dispersion of the oxide particles was excellent, side reactions of the oxide particles were suppressed, and the stability was excellent. In addition, it was confirmed that, by performing a two-stage drying process using two kinds of solvents having different polarities and boiling points, uniform micropores were formed, and lithium-ion flow channels were formed within the composite membrane, thereby allowing the electrolyte to be uniformly distributed and promoting active migration of lithium ions, which resulted in the realization of high ionic conductivity.

Coin cells were manufactured using the composite membranes manufactured according to Examples 1 to 5 and Comparative Example 4, and the ionic conductivity and discharge capacity were evaluated. The results are shown in Table 3.

[Table 3]

|  | Ionic conductivity [x10$^{-4}$S/cm] | Discharge capacity (@0.1 C) [mAh/g] | Discharge capacity (@2 C) [mAh/g] | Discharge capacity at 2 C relative to that at 0.1 C (%) |
|---|---|---|---|---|
| Example 1 | 7.52 | 203.7 | 126.0 | 61.8 |
| Example 2 | 10.26 | 189.2 | 101.1 | 53.4 |
| Example 3 | 13.84 | 186.4 | 132.6 | 71.1 |
| Example 4 | 3.20 | 200.0 | 98.4 | 49.2 |
| Example 5 | 9.00 | 203.0 | 83.8 | 41.2 |
| Comparative Example 4 | 2.02 | 200.1 | 32.9 | 16.4 |

As shown in Table 3, the battery including the organic-inorganic composite electrolyte according to an Example of the present disclosure exhibited a significantly high discharge capacity even at a high rate as compared with the Comparative Example, and showed the highest value in the discharge capacity (%) at 2 C relative to that at 0.1 C. Specifically, in the organic-inorganic composite membranes according to Examples 1 to 5, by using a combination of a fluorine-based copolymer containing 10 to 25 wt% of HFP and a specific solvent, side reactions of lithium-lanthanum-zirconium-based oxide particles were effectively suppressed, and the fluorine-based copolymer containing 10 to 25 wt% of HFP exhibited excellent solubility, such that a matrix in which the oxide particles were uniformly dispersed could be manufactured. In addition, by uniformly forming micropores through a two-stage drying process, lithium-ion transport in the electrolyte filling the pores was activated, resulting in superior high-rate characteristics and stable charge and discharge performance as compared with the Comparative Example.

Through this, it was confirmed that, when a lithium secondary battery including the organic-inorganic composite membrane according to an exemplary embodiment was manufactured, significantly improved lifespan characteristics and high-rate characteristics could be achieved.

Therefore, the organic-inorganic composite membrane according to an exemplary embodiment may form a porous matrix having uniform micropores from a slurry composition containing a first solvent and a second solvent satisfying the above-described conditions, a fluorine-based copolymer having a specific HFP content, and lithium-lanthanum-zirconium-based oxide particles, and may be manufactured by filling the pores of the porous matrix with a polymer electrolyte containing a lithium salt. Accordingly, a free-standing membrane may be formed, and side reactions between the solvent and the lithium-lanthanum-zirconium-based oxide particles may be minimized, which results in an improvement in ionic conductivity. In addition, it was confirmed that, when a lithium secondary battery including the organic-inorganic composite membrane was manufactured using the organic-inorganic composite electrolyte, the battery exhibited remarkably improved lifespan characteristics and high-rate characteristics compared with the conventional battery.

As set forth above, the organic-inorganic composite membrane according to an exemplary embodiment of the present disclosure may replace a separator because it may be manufactured as a free-standing membrane and includes micropores. Further, the organic-inorganic composite membrane according to an exemplary embodiment of the present disclosure may have high ionic conductivity, excellent thermal and chemical stability, and excellent mechanical strength. Further, a lithium secondary battery including the organic-inorganic composite membrane may achieve an improvement in chemical and mechanical stability compared with a case where only a liquid organic electrolyte is used, and may achieve excellent lifespan characteristics and high-rate performance.

Although the present disclosure has been described with reference to specific matters and limited exemplary embodiments, they have been provided only for assisting in the overall understanding of the present disclosure. Therefore, the present disclosure is not limited to the exemplary embodiments, and various modifications and changes may be made by those skilled in the art to which the present disclosure pertains from this description.

Therefore, the present disclosure should not be construed as being limited to the exemplary embodiments described above, and it is to be understood that the appended claims and all equivalents and modifications thereof are intended to fall within the scope of the present disclosure.

**Claims**

1. An organic-inorganic composite membrane for a secondary battery, the organic-inorganic composite membrane comprising:

    a porous matrix containing a fluorine-based copolymer and lithium-lanthanum-zirconium-based oxide particles; and
    a crosslinked network polymer electrolyte filling one or more pores of the porous matrix,
    wherein the fluorine-based copolymer contains 10 to 25 wt% of a hexafluoropropylene-derived repeating unit.

2. The organic-inorganic composite membrane of claim 1, wherein the fluorine-based copolymer is polyvinylidene fluoride-hexafluoropropylene, and, optionally,
   the fluorine-based copolymer is contained in an amount of 10 to 60 wt% based on the total weight of the porous matrix.

3. The organic-inorganic composite membrane of claim 1 or 2, wherein the lithium-lanthanum-zirconium-based oxide particles are represented by the following Chemical Formula 1:

    [Chemical Formula 1] $\qquad Li_x M_{1a} M_{2b} La_y Zr_z M_{3c} O_{12}$

    wherein

    $5 \leq x \leq 9$, $0 \leq a \leq 4$, $0 \leq b \leq 4$, $2 \leq y \leq 4$, $1 \leq z \leq 3$, and $0 \leq c \leq 4$, and
    $M_1$ to $M_3$ are each independently an element selected from the group consisting of Na, Mg, Ca, Y, Ti, Hf, V, Nb, Ta, Cr, Mo, W, Mn, Co, Fe, Cu, Ag, Zn, B, Al, Ga, C, Si, and Sn, and optionally,
    the lithium-lanthanum-zirconium-based oxide particles are contained in an amount of 40 to 90 wt% based on the total weight of the porous matrix.

4. The organic-inorganic composite membrane of any one of claims 1 to 3, wherein the porous matrix includes a continuous phase containing the fluorine-based copolymer and a dispersed phase containing the lithium-lanthanum-zirconium-based oxide particles.

5. The organic-inorganic composite membrane of any one of claims 1 to 4, wherein the crosslinked network polymer electrolyte contains an acrylic-based polymer and a lithium salt.

6. The organic-inorganic composite membrane of any one of claims 1 to 5, wherein the crosslinked network polymer electrolyte is contained in an amount of 10 to 80 parts by weight based on 100 parts by weight of the porous matrix.

7. A slurry composition for manufacturing an organic-inorganic composite membrane, the slurry composition comprising: a fluorine-based copolymer, lithium-lanthanum-zirconium-based oxide particles, a first solvent, and a second solvent,

    wherein the fluorine-based copolymer contains 10 to 25 wt% of a hexafluoropropylene-derived repeating unit, and
    the second solvent has a lower polarity than the first solvent.

8. The slurry composition of claim 7, wherein the first solvent has a Hansen solubility parameter $(\delta_{Ts1})$ of 18 to 25 $MPa^{0.5}$, and the second solvent has a Hansen solubility parameter $(\delta_{Ts2})$ of 17 $MPa^{0.5}$ or less.

9. The slurry composition of claim 7 or 8, wherein a difference in Hansen solubility parameter between the first solvent and the fluorine-based copolymer is 1 $MPa^{0.5}$ or more and less than 15.0 $MPa^{0.5}$.

10. The slurry composition of any one of claims 7 to 9, wherein the first solvent and the second solvent each have a dipole moment of 2.8 Debye (D) or less and a dielectric constant of 20 or less.

11. The slurry composition of any one of claims 7 to 10, wherein a weight ratio of the first solvent to the second solvent is 5 to 50:1.

12. A method for manufacturing an organic-inorganic composite membrane for a secondary battery, the method comprising:

(S1) preparing a slurry composition for manufacturing an organic-inorganic composite membrane, the slurry composition containing a fluorine-based copolymer, lithium-lanthanum-zirconium-based oxide particles, a first solvent, and a second solvent;
(S2) forming a porous matrix by applying and drying the slurry composition; and
(S3) impregnating a multifunctional monomer composition containing a multifunctional acrylic-based monomer, an initiator, and a lithium salt into the porous matrix and performing curing to form a crosslinked network polymer electrolyte,
wherein the fluorine-based copolymer contains 10 to 25 wt% of a hexafluoropropylene-derived repeating unit.

13. The method of claim 12, wherein the step (S1) includes:

(a) dissolving the fluorine-based copolymer in the first solvent; and
(b) adding and mixing the lithium-lanthanum-zirconium-based oxide particles and the second solvent.

14. The method of claim 12 or 13, wherein the step (S2) includes:

(c) drying the first solvent of the slurry composition at a first drying temperature; and
(d) drying the second solvent of the slurry composition at a second drying temperature, and
the second drying temperature is higher than the first drying temperature.

15. A lithium secondary battery comprising the organic-inorganic composite membrane for a secondary battery of any one of claims 1 to 6.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240162965

- WO 1020250170517 A